# EUROPÄISCHE PATENTANMELDUNG

(11) **EP 2 472 687 A1**
(43) Veröffentlichungstag der Anmeldung: **04.07.2012**
(21) Anmeldenummer: 10016156.1
(22) Anmeldetag: 29.12.2010
(51) Int. Cl.: H02G 15/103, H02G 15/184, H01R 13/53

(54) **Verbindungsmuffe für Innenkonus-Kabelanschlüsse sowie Verfahren zur Herstellung der Verbindungsmuffe**

(71) Anmelder: Südkabel GmbH, 68199 Mannheim (DE)
(72) Erfinder: Bittmann, Juergen, 67259 Heuchelheim (DE)
(74) Vertreter: Schmitt, Meinrad

(57) **Zusammenfassung**

Die Erfindung betrifft eine Verbindungsmuffe für Innenkonus-Kabelendverschlüsse, enthaltend eine metallische Kontakthülse (2) und einen Feldsteuerkörper(4), welcher von Isoliermaterial (6) umgeben ist, wobei an der Außenfläche des Isoliermaterials (6) eine Metallschicht angeordnet ist und wobei in wenigstens einem axialen Endbereich (8, 9) eine konusförmige Öffnung (10, 11) sowie ein Verbindungskörper (16) vorgesehen sind. Ferner betrifft die Erfindung ein Verfahren zur Herstellung einer derartigen Verbindungsmuffe. Es liegt die Aufgabe zu Grunde, die Verbindungsmuffe mit einem geringen konstruktiven Aufwand und mit einem in einfacher Weise durchzuführenden Verfahren dahingehend weiterzubilden, dass eine funktionssichere Verbindung erreicht wird und das die Verbindungsmuffe äußeren Einwirkungen und selbst hohen mechanischen Belastungen standhalten kann. Ferner soll die Herstellung der Verbindungsmuffe vereinfacht und insbesondere die Anzahl der Verfahrensschritte reduziert werden. Es wird vorgeschlagen, dass die Metallschicht als ein Metallrohr (12) ausgebildet ist, dass das Metallrohr (12) innen mit dem Isoliermaterial (6) derart ausgefüllt ist, dass dieses vollständig und hohlraumfrei unmittelbar an der Innenfläche (13) des Metallrohrs (12) anliegt und ferner den Feldsteuerkörper (4) umgibt, dass in den Feldsteuerköper (4) die Kontakthülse (2) eingebettet ist und dass der wenigstens eine Verbindungskörper (16) mit dem Metallrohr (12) fest verbunden ist.

## Beschreibung

Die Erfindung bezieht sich auf eine Verbindungsmuffe für Innenkonus-Kabelendverschlüsse, enthaltend einen Feldsteuerkörper gemäß den im Oberbegriff des Patentanspruchs angegebenen Merkmalen. Ferner bezieht sich die Erfindung auf ein Verfahren zur Herstellung einer solchen Verbindungsmuffe.

Aus der EP 0 692 153 B1 ist eine derartige Verbindungsmuffe mit zwei von Isoliermaterial umgebenen Feldsteuerkörpern bekannt, innerhalb welcher eine Kontakthülse angeordnet ist. Diese Verbindungsmuffe ist als Doppelmuffe ausgebildet und enthält an den beiden axialen Enden im Isoliermaterial jeweils eine konusförmige Öffnung zur Aufnahme jeweils eines Hochspannungs-Kabelendverschlusses. Im Bereich der axialen Enden sind ferner Verbindungselemente in Form von Gewindebuchsen vorgesehen, welche in das Isoliermaterial eingegossen sind und die Verbindung bzw. Verschraubung mit den Kabelendverschlüssen ermöglichen. Die Kraftaufnahme und/oder Kraftübertragung erfolgt über das Isoliermaterial. Auf der Außenfläche des Isoliermaterials ist eine elektrisch leitende Schicht aus Metall, wie z.B. Aluminium, aufgespritzt. Zur Herstellung der Verbindungsmuffe werden die Kontakthülse und die beiden Feldsteuerkörper mit dem als Gießharz ausgebildeten Isoliermaterial umgossen, wobei an den axialen Enden ferner die genannten Verbindungskörper eingegossen werden. Nachfolgend wird auf die Außenfläche die metallische Leitschicht durch Flammspritzen aufgebracht und schließlich wird über die Leitschicht in einem weiteren Verfahrensschritt außen aus Gießharz ein Außenteil gegossen, mit welchem die genannte Leitschicht gegen äußere Einwirkungen geschützt wird.

Hiervon ausgehend liegt der Erfindung die Aufgabe zugrunde, mit einem geringen konstruktiven Aufwand die Verbindungsmuffe dahingehend weiterzubilden, dass die aufgezeigten Nachteile vermieden werden und eine funktionssichere Verbindung des Hochspannungs-Kabelendverschlusses erreicht wird. Die Verbindungsmuffe soll äußeren Einwirkungen und/oder selbst hohen mechanischen Belastungen standhalten und/oder eine lange Lebensdauer aufweisen. Es sollen mit hoher Funktionssicherheit sowohl die elektrische Feldbegrenzung als auch der Berührungsschutz beim Betrieb der Kabelverbindung gewährleistet werden. Ferner soll die Herstellung der Verbindungsmuffe vereinfacht und/oder die Anzahl der Verfahrensschritte reduziert werden.

Die Lösung dieser Aufgabe erfolgt hinsichtlich der Verbindungsmuffe gemäß den im Patentanspruch 1 angegebenen Merkmalen. Hinsichtlich des Verfahrens erfolgt die Lösung gemäß den Merkmalen des auf das Verfahren gerichteten Patentanspruchs.

Die erfindungsgemäß Verbindungsmuffe zeichnet sich durch eine funktionssichere und den betrieblichen Anforderungen in hervorragender Weise entsprechende Konstruktion aus. Die Verbindungsmuffe enthält außen ein Metallrohr, mit welchem sowohl die elektrische Feldbegrenzung als auch der Berührungsschutz beim Betrieb der Kabelverbindung sichergestellt ist. Das Metallrohr ist innen mit dem Isoliermaterial ausgefüllt, welches insbesondere als Isoliersilikon ausgebildet ist, wobei das Isoliermaterial unmittelbar und frei von Hohlräumen oder Spalten an der Innenfläche des Metallrohrs fest anliegt. Zwischen der Innenfläche und dem Isoliermaterial besteht nach dem Ausfüllen, insbesondere Gießen oder Spritzen, eine direkte bzw. unmittelbare Haftverbindung. Das Isoliermaterial haftet in vorteilhafter Weise, insbesondere durch Verwendung eines Haftvermittlers, fest und weitestgehend vollständig und / oder hohlraumfrei an der Innenfläche des Metallrohrs. Zusätzlich oder alternativ können an der Innenfläche ferner mechanische Verankerungen und/oder Verbindungselemente, wie Haken oder Stege oder dergleichen, vorgesehen sein zwecks funktionssicherer Verbindung und Festlegung beim Ausfüllen, insbesondere Gießen oder Spritzen, des Isoliermaterials. Der Feldsteuerkörper ist als eine im Wesentlichen zylindrische Hülse ausgebildet und/oder weist eine im Wesentlichen zylindrische Außenfläche auf, welche sich über die gesamte axiale Länge erstreckt. Innerhalb des Feldstreukörpers und koaxial zu diesem ist die metallische Kontakthülse angeordnet, und zwar insbesondere eingebettet und/oder eigegossen. Der Feldsteuerkörper ist als eine Glättungshülse ausgebildet und gemeinsam mit der integral verbundenen Kontakthülse in das umgebende Isoliermaterial eingebettet, insbesondere eingegossen. An dem wenigsten einen freien Ende des Metallrohrs, bei Ausbildung der Verbindungsmuffe als Doppelmuffe an den beiden axialen Enden, ist bzw. sind mit dem Metallrohr der bzw. die Verbindungskörper fest, insbesondere durch Schweißen, verbunden. Somit erfolgt die Kraftaufnahme und/oder Kraftübertragung über und/oder mittels des Metallrohrs ohne eine nachteilige Kräftebeaufschlagung des Isoliermaterials.

Zur Herstellung der Verbindungsmuffe werden der Feldsteuerkörper, welcher bevorzugt als Glättungshülse ausgebildet ist, und die Kontakthülse in einem Formgebungswerkzeug festgelegt und unter Bildung eines Hohlraums von dem Metallrohr umgeben. Der genannte Hohlraum wird nachfolgend mit dem Isoliermaterial ausgefüllt, wobei der Feldsteuerkörper samt Kontakthülse in das Isoliermaterial integriert werden. Das Metallrohr bildet eine sogenannte verlorene Form und ist nach der Herstellung der Verbindungsmuffe integraler Bestandteil derselben. Weitere Verfahrensschritte sind nicht erforderlich. Durch das Ausfüllen, insbesondere Gießen oder Spritzen, des Hohlraums mit dem Isoliermaterial, haftet dieses unmittelbar und/oder frei von Hohlräumen oder Spalten fest an der Innenfläche des Metallrohrs. Der zur elektrischen Feldsteuerung vorgesehene Feldsteuerkörper bzw. die Glättungshülse, welche insbesondere aus elektrische leitfähigem Silikon bestehen, ist zuverlässig in das Isoliermaterial, insbesondere Isoliersilikon, eingebettet, bevorzugt eingegossen. Die metallische Kontakthülse ist fest mit dem Feldsteuerkörper verbunden. In einer besonders zweckmäßigen Ausgestaltung enthält die aus Metall bestehende Kontakthülse radial außen mechanische Verankerungen, so dass eine zuverlässige und dauerhafte Verbindung zwischen dem Metall und dem leitfähigen Silikon vorgegeben ist. Der Feldsteuerkörper und die zuvor mit diesem zu einer integralen Baueinheit verbundene Kontakthülse werden im gleichen Verfahrensschritt, nämlich beim Ausfüllen des Metallrohrs mir lsoliermaterial, vom Isoliermaterial umgeben und insbesondere in das Isoliermaterial eingegossen.

Besondere Ausgestaltungen und Weiterbildungen der Erfindung sind in den Unteransprüchen sowie der nachfolgenden Beschreibung besonderer Ausführungsbeispiele angegeben. Die Ausführungsbeispiele betreffen die Ausbildung der Verbindungsmuffe als Doppelmuffe zwecks Verbindung von zwei Hochspannungs-Innenkonus-Kabelendverschlüssen. Es sei ausdrücklich darauf hingewiesen, dass die Erfindung auch Verbindungsmuffen umfasst, welche nur an einem axialen Ende die konusförmige Öffnung zur Aufnahme eines einzigen Kabelendverschlusses aufweisen und im übrigen bzw. am anderen Ende mit einer elektrischen Baugruppe, wie beispielsweise einem Transformator oder einer Schaltanlage oder elektrischen Maschine, verbunden ist.

Die Erfindung wird nachfolgend anhand der in der Zeichnung dargestellten besonderen Ausführungsbeispiele näher erläutert, ohne dass insoweit eine Beschränkung erfolgt. Es zeigen in schematischen Darstellungen:
- Fig. 1: einen Schnitt in einer axialen Schnittebene der Verbindungsmuffe,
- Fig. 2: eine perspektivische Ansicht der Verbindungsmuffe,
- Fig. 3, 4: perspektivisch und als axialen Schnitt eine besondere Ausführungsform der Kontakthülse.

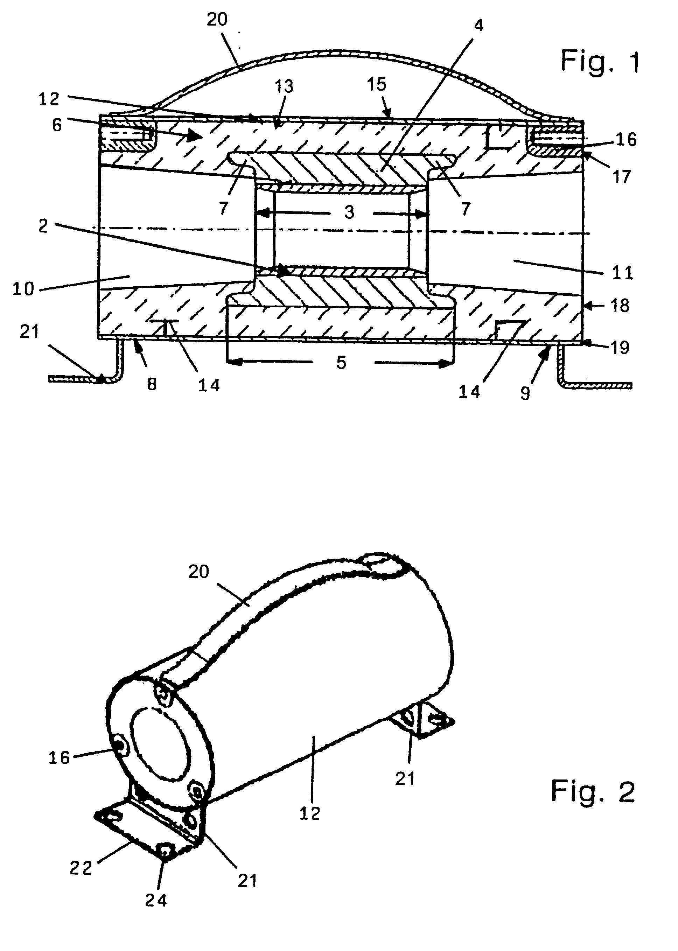

Gemäß Fig. 1 enthält die Verbindungsmuffe radial innen die Kontakthülse 2 aus Metall zur Stromübertragung, welche eine axiale Länge 3 aufweist. Die Kontakthülse 2 ist innerhalb des Feldsteuerkörpers 4 eingebettet, welcher bevorzugt als eine einzige, insbesondere zylindrische Glättungshülse ausgebildet ist und zur elektrischen Feldsteuerung dient. Der Feldsteuerkörper 4 weist eine axiale Länge 5 auf, welche um einen vorgegebenen Faktor größer ist als die Länge 3 der Kontakthülse 2. Der Feldsteuerkörper bzw. die Glättungshülse 4 besteht bevorzugt aus elektrisch leitfähigem Silikon. Die Kontakthülse 2 und der Feldsteuerkörper 4, welcher nachfolgend der Einfachheit halber als Glättungshülse bezeichnet wird, sind fest miteinander verbunden. Die einzige Glättungshülse 4 ist in das Isoliermaterial 6, insbesondere Isoliersilikon, eingegossen. Der Feldsteuerkörper 4 ragt mit axialen Endteilen 7, welche bevorzugt zylindrisch ausgebildet sind, an beiden Enden über die Kontakthülse 2 jeweils um einen vorgegebenen Betrag axial hinaus. Die Endteile 7 sind in bevorzugter Weise vollständig in das Isoliermaterial 6 eingebettet, insbesondere eingegossen. Die Außenfläche des Feldsteuerkörpers 4 und/oder der Feldsteuerkörper 4 insgesamt sind bevorzugt im Wesentlichen zylindrisch ausgebildet. Wie ersichtlich, enthält die Verbindungsmuffe und/oder deren Isoliermaterial 6 in den axialen Endbereichen 8, 9 jeweils eine konische Öffnung 10, 11 zur Aufnahme eines Hochspannungs-Innenkonus-Kabelendverschlusses.

Das Isoliermaterial 6 ist radial außen von einem Metallrohr 12 umgeben, welches bevorzugt im Wesentlichen zylindrisch ausgebildet ist und eine Innenfläche 13 aufweist. Bei der Herstellung wurde das Metallrohr 12 innen mit dem Isoliermaterial 6 ausgefüllt, wobei in bevorzugter Weise die Innenfläche 13 des Metallrohrs 12 mit einem Haftvermittler versehen wurde, um eine feste und/oder vollständige und/oder hohlraumfreie Haftung und/oder Verbindung des Isoliermaterials 6 an bzw. mit der Innenfläche 13 zu erhalten. Zusätzlich oder alternativ können ferner an der Innenfläche des Metallrohrs 12 mechanische Verankerungen 14 vorgesehen sein, welche insbesondere als Stege, Winkel oder dergleichen ausgebildet sind. Die mechanischen Verankerungen 14 sind bevorzugt in axialer Richtung beabstandet bezüglich der Glättungshülse 4 angeordnet, um eine Beeinträchtigung der elektrischen Feldsteuerung oder gar elektrische Überschläge mit Sicherheit zu vermeiden. Zwischen der Außenfläche 15 des Isoliermaterial 6 und der Innenfläche 13 des Metallrohrs 12 besteht die erfindungsgemäße direkte Haftverbindung.

An den beiden axialen Endbereichen 8, 9 eine vorgegebene Ansicht, bevorzugt weist das Metallrohr 12 erfindungsgemäß Verbindungskörper 16 auf. Die Verbindungskörper 16 sind bevorzugt als Gewindebuchsen ausgebildet und dienen zur mechanischen Verbindung zugeordneter Verbindungselemente des jeweiligen Kabelendverschlusses. Vorteilhaft sind an dem jeweiligen axialen Endbereich 8, 9 drei über den Umfang gleichmäßig verteilt angeordnete Verbindungskörper und/oder Gewindebuchsen 16 vorgesehen und mit dem Metallrohr 12 an dessen Innenfläche 13 fest verbunden, insbesondere mittels Schweißverbindungen. Die Verbindungskörper 16 sind ebenfalls in das Isoliermaterial 6 eingebettet und/oder eingegangen, wobei deren axiale Endfläche 17 bevorzugt bündig mit der axialen Stirnfläche 19 des Metallrohrs 12 angeordnet sind. Des Weiteren ist die axiale Endfläche 18 des Isoliermaterials 6 im jeweiligen axialen Endbereich 8, 9 in bevorzugter Weise bündig bzw. in der gleichen Radialebene angeordnet wie die genannten axialen Endflächen 17 und/oder die axiale Stirnfläche 19 des Metallrohrs 12. Die Kraftaufnahme bzw. Kraftübertragung zwischen den beiden Hochspannungs-Innenkonus-Kabelendverschlüssen erfolgt erfindungsgemäß mit dem und/oder über das Metallrohr 12.

Weiterhin weist die Verbindungsmuffe und/oder deren Metallrohr 12 einen Griff 20 auf, welcher bevorzugt mit dem Metallrohr 12 fest verbunden ist. Der Griff 20 dient insbesondere zum Transport der Verbindungsmuffe und/oder zur verbesserten Handhabung. Des Weiteren weist die Verbindungsmuffe an ihrer Unterseite Stützen 21 auf, welche zur Befestigung auf einem Untergrund vorgesehen sind und/oder an der Außenseite des Metallrohrs 12, insbesondere in den axialen Endbereichen 8, 9 angeordnet sind.

Gemäß Fig. 2 sind die Stützen 21 zweckmäßig als Winkelstücke ausgebildet und/oder enthalten ein Bodenblech 22. Das Bodenblech 22 enthält vorteilhaft wenigstens ein Loch 24, zweckmäßig zwei derartige Löcher, durch welche hindurch Schrauben zur Befestigung der Verbindungsmuffe mit einem Untergrund oder dergleichen vorgenommen werden kann.

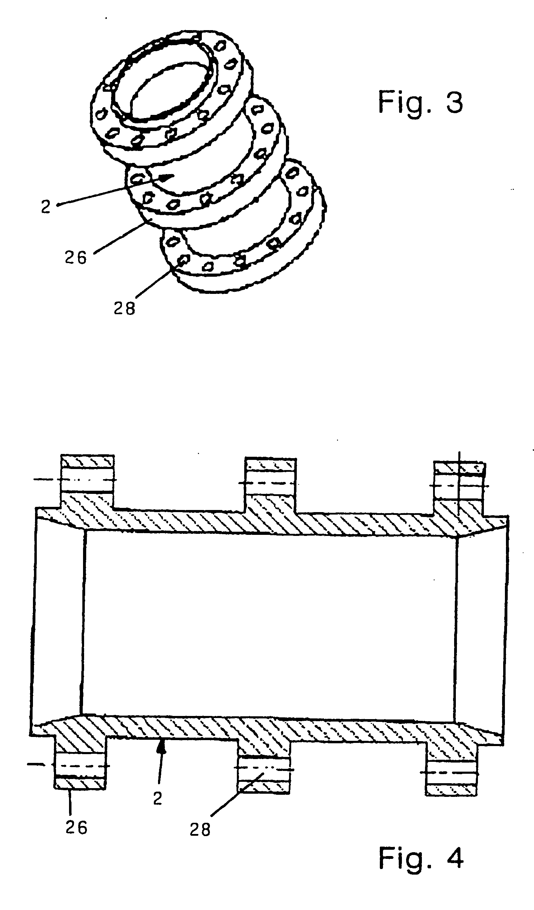

Fig. 3 und 4 zeigen eine besondere Ausgestaltung der metallischen Kontakthülse 2 mit mechanischen Verankerungselemente 26, welche eine funktionssichere Festlegung der Kontakthülse 2 in der Glättungshülse sicherstellen. Die Verankerungselemente 26 erstrecken sich radial nach außen und greifen in die umgebende Glättungshülse ein, ohne diese aber vollständig in radialer Richtung zu durchdringen. Die Verankerungselemente 26 sind insbesondere ringförmig ausgebildet und/oder enthalten Durchbrechungen 28, welche bei der Herstellung mit dem Material, insbesondere dem leitfähigen Silikon, der Glättungshülse umgeben und/oder ausgefüllt werden.

### Bezugszeichen

- 2: Kontakthülse
- 3: axiale Länge von 2
- 4: Feldsteuerkörper/Glättungshülse
- 5: axiale Länge von 4
- 6: Isoliermaterial
- 7: Endteil von 4
- 8, 9: axialer Endbereich
- 10, 11: konische Öffnung in 6
- 12: Metallrohr
- 13: Innenfläche von 12
- 14: mechanische Verankerung
- 15: Außenfläche von 6
- 16: Verbindungskörper/Gewindebuchse
- 17: axiale Endfläche von 16
- 18: axiale Endfläche von 6
- 19: axiale Stirnfläche von 12
- 20: Stütze/Winkelstück
- 21: Griff
- 22: Bodenblech von 20
- 24: Loch in 22
- 26: Verankerungselement von 2
- 28: Durchbrechung in 26

## Patentansprüche

1. Verbindungsmuffe für Innenkonus-Kabelendverschlüsse, enthaltend eine metallische Kontakthülse (2) und einen Feldsteuerkörper (4), welcher von Isoliermaterial (6) umgeben ist, wobei an der Außenfläche des Isoliermaterials (6) eine Metallschicht angeordnet ist und wobei in wenigstens einem axialen Endbereich (8, 9) eine konusförmige Öffnung (10, 11) sowie ein Verbindungskörper (16) vorgesehen sind,
**dadurch gekennzeichnet, dass** die Metallschicht als ein Metallrohr (12) ausgebildet ist, dass das Metallrohr (12) innen mit dem Isoliermaterial (6) derart ausgefüllt ist, dass dieses vollständig und hohlraumfrei unmittelbar an der Innenfläche (13) des Metallrohrs (12) anliegt und ferner den Feldsteuerkörper (4) umgibt, dass in den Feldsteuerköper (4) die Kontakthülse (2) eingebettet ist und dass der wenigstens eine Verbindungskörper (16) mit dem Metallrohr (12) fest verbunden ist.

2. Verbindungsmuffe nach Anspruch 1, **dadurch gekennzeichnet, dass** das Metallrohr (12) innen mit dem Isoliermaterial (6), insbesondere Isoliersilikon, durch ein Spritzverfahren oder ein Gießverfahren ausgefüllt ist.

3. Verbindungsmuffe nach Anspruch 1 oder 2, **dadurch gekennzeichnet, dass** der elektrische Feldsteuerkörper (4) als eine Glättungshülse ausgebildet ist, welche insbesondere aus leitfähigem Silikon besteht, und/oder dass der Feldsteuerkörper (4) einteilig ausgebildet ist, und/oder dass der Feldsteuerkörper (4) im Wesentlichen zylindrisch ausgebildet ist und/oder eine im Wesentlichen zylindrische Außenfläche aufweist, welche sich bevorzugt über die gesamte axiale Länge (5) erstreckt.

4. Verbindungsmuffe nach einem der Ansprüche 1 bis 3, **dadurch gekennzeichnet, dass** der Feldsteuerkörper (4) eine axiale Länge (5) aufweist, welche größer ist als die axiale Länge (3) der Kontakthülse (2) und/oder dass der Feldsteuerköper (4) an wenigstens einem Ende ein bevorzugt zylindrisches Endteil (4) aufweist, welches in einem vorgegebenen Betrag axial über die Kontakthülse (2) vorsteht und/oder welches vollständig vom Isoliermaterial (6) umgeben ist.

5. Verbindungsmuffe nach einem der Ansprüche 1 bis 4, **dadurch gekennzeichnet, dass** das Metallrohr (12) an der Innenfläche (13) mechanische Verankerungen (14) aufweist, welche in das Isoliermaterial (6) eingreifen.

6. Verbindungsmuffe nach einem der Ansprüche 1 bis 5, **dadurch gekennzeichnet, dass** die Kontakthülse (2) Verankerungselemente (26) aufweist, welche in den umgebenden Feldsteuerkörper (4) eingreifen.

7. Verbindungsmuffe nach einem der Ansprüche 1 bis 6, **dadurch gekennzeichnet, dass** das Isoliermaterial (6) über eine Haftverbindung direkt mit der Innenfläche (13) des Metallrohrs (12) verbunden ist.

8. Verbindungsmuffe nach einem der Ansprüche 1 bis 7, **dadurch gekennzeichnet, dass** eine Anzahl von Verbindungsköpern (6), welche bevorzugt als Gewindebuchsen ausgebildet sind, bezogen auf die Längsachse der Verbindungsmuffe über den Umfang im Wesentlichen gleichmäßig verteilt angeordnet sind und/oder dass der oder die Verbindungskörper (16) an der Innenfläche des Metallrohrs (12) angeordnet und/oder fest mit diesem verbunden sind, insbesondere angeschweißt sind.

9. Verbindungsmuffe nach einem der Ansprüche 1 bis 8, **dadurch gekennzeichnet, dass** der wenigstens eine Verbindungskörper (16) eine axiale Endfläche (17) aufweist, welche im Wesentlichen in der gleichen Radialebene liegt wie die axiale Stirnfläche (19) des Metallrohrs (12) und/oder die axiale Endfläche (18) des Isoliermaterials (6).

10. Verbindungsmuffe nach einem der Ansprüche 1 bis 9, **dadurch gekennzeichnet, dass** innerhalb des Feldsteuerkörpers und/oder der Glättungshülse (4) die metallische Kontakthülse (2) eingebettet ist, und /oder dass die Kontakthülse (2) und der Feldsteuerkörper bzw. die Glättungshülse (4) fest miteinander verbunden sind.

11. Verbindungsmuffe nach einem der Ansprüche 1 bis 10, **dadurch gekennzeichnet, dass** mit dem Metallrohr (12), insbesondere mit dessen Außenfläche, ein Griff (21) verbunden ist.

12. Verbindungsmuffe nach einem der Ansprüche 1 bis 11, **dadurch gekennzeichnet, dass** mit dem Metallrohr (12) wenigstens eine Stütze (20) verbunden ist, wobei bevorzugt an beiden Endbereichen 8, 9 jeweils eine derartige Stütze (20) angeordnet ist.

13. Verfahren zur Herstellung einer Verbindungsmuffe für Innenkonus-Kabelendverschlüsse, enthaltend einen Feldsteuerkörper (4), innerhalb welchem eine Kontakthülse (2) angeordnet wird und welche von Isoliermaterial (6) umgeben wird, wobei an der Außenfläche des Isoliermaterials (6) eine Metallschicht vorgesehen wird und wobei in wenigstens in einem axialen Endbereich (8, 9) eine konusförmige Öffnung (10, 11) sowie wenigstens ein Verbindungskörper (16) vorgesehen wird, **dadurch gekennzeichnet, dass** der Feldsteuerkörper (4) und die in diesem angeordnete metallische Kontakthülse (2) in einem Formgebungswerkzeug angeordnet und unter Bildung eines Hohlraums von dem Metallrohr (12) umgeben werden und dass nachfolgend der Hohlraum mit dem Isoliermaterial (6) ausgefüllt wird, wobei eine unmittelbare Verbindung und/oder direkte Anlage des Isoliermaterials (6) an der Innenfläche (13) des Metellrohrs (12) hergestellt wird.

14. Verfahren nach Anspruch 13, **gekennzeichnet durch** die Herstellung der Verbindungsmuffe nach einem der Ansprüche 1 bis 12.
